# EUROPEAN PATENT SPECIFICATION

(11) **EP 1 828 213 B1**
(45) Date of publication and mention of the grant of the patent: **18.08.2010**
(21) Application number: 05813898.3
(22) Date of filing: 01.12.2005
(51) Int. Cl.: C07F 7/18, C07F 7/00, C08G 77/04

(54) **USE OF SILICON COMPOUNDS WITH UNITS COMPRISING NITROGEN ATOMS FOR THE TREATMENT OF FIBER MATERIALS**
VERWENDUNG VON SILIZIUMVERBINDUNGEN MIT STICKSTOFFATOMHALTIGEN EINHEITEN FÜR DIE BEHANDLUNG VON FASERMATERIALIEN
UTILISATION DES COMPOSES A BASE DE SILICIUM AYANT DES MOTIFS COMPRENANT DES ATOMES D'AZOTE POUR LE TRAITEMENT DE MATERIAUX EN FIBRE

(30) Priority: 22.12.2004 EP 04030383
(43) Date of publication of application: 05.09.2007
(73) Proprietor: Huntsman Textile Effects (Germany) GmbH, 86462 Langweid (DE)
(72) Inventor: CHROBACZEK, Harald, 86153 Augsburg (DE); CHOWDHURY, Kenneth, 40215 Düsseldorf (DE)
(86) International application number: PCT/EP2005/012810
(87) International publication number: WO 2006/066696

(56) References cited:
- EP-A- 0 459 675
- US-A- 4 374 237
- US-A- 5 130 401

## Description

The invention relates to the use of specific silicon compounds which can be prepared from functional silanes for the treatment of fiber materials. It also relates to the use of products which can be prepared from these silicon compounds by reaction with compounds which comprise reactive groups or with polyorganosiloxanes for the treatment of fiber materials.

It is known to treat fiber materials which comprise cellulose fibers with so-called cellulose crosslinkers in order to positively influence the crease behavior of textile articles. For this purpose, silanes with reactive groups have already been used. This is evident, for example, from US 3 055 774 and EP-A 563 961. In addition, EP-A 401 668 describes the reaction of reactive silicon compounds with cellulose products.
WO 02/070528 describes the transesterification of alkoxysilanes using alcohols.
EP-A 459 675 discloses an adhesive composition which comprises a silicon compound preparable by reacting an amino-functional silane with an acrylato-functional silane.
US-A 5 130 401 discloses an organopolysiloxane composition having good adhesive properties which comprises a silicon compound preparable by reacting an amino-functional silane with an acrylato-functional silane.
US-A 4 374 237 discloses a curable composition comprising the reaction product of an isocyanate terminated polyurethane prepolymer and a bis silane, where said bis silane can also be a silicon compound preparable by reacting an amino-functional silane with an acrylato-functional silane.

The silicon compounds which are known from the prior art for treating fiber materials comprising cellulose are still not optimal with regard to chemical reactivity toward cellulose and level of the effects achieved with textile fabrics.

The object on which the present invention is based was to provide silicon compounds with which it is possible to carry out highly effective crosslinking of textile fabrics which consist to a substantial proportion of cellulose fibers, and with which polyorganosiloxanes can be reacted in order to obtain thus modified polyorganosiloxanes with which it is possible to achieve good permanency of those effects which are obtained when treating textile fabrics with these modified polyorganosiloxanes.

The object has been achieved by use of silicon compounds which can be prepared by reacting a silane of the formula (I) or a mixture of silanes of the formula (I) 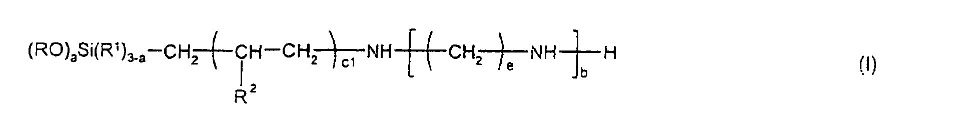 with a silane of the formula (II) or a mixture of silanes of the formula (II) 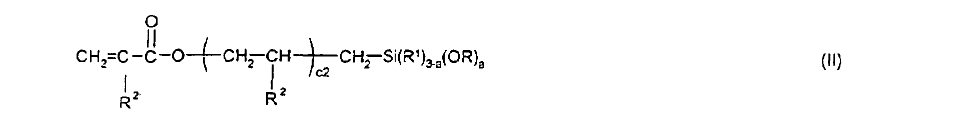 where the molar ratio of silanes of the formula (I) used to silanes of the formula (II) used is 5:1 to 1:5, preferably 3:1 to 1:2,
and optional further reaction of the resulting products with compounds which are chosen from formaldehyde, sulfuric acid, mixtures of acetic acid and low molecular weight alcohols; and compounds of the formulae (III), (IV), (V), (VI), (VII) and (VIII) where, in the case of the reaction with formaldehyde, the -CH₂OH radicals which form may have been etherified with a monohydric or polyhydric aliphatic alcohol having 1 to 6 carbon atoms,
and optional further reaction with a polyorganosiloxane by means of an equilibration and/or condensation reaction,

Ar-SO₃- R³ (III)

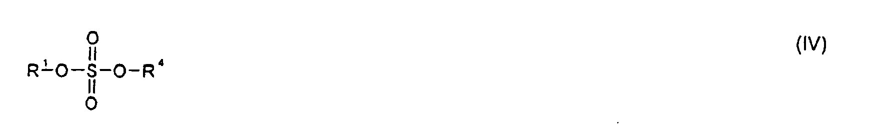

R⁵-Hal (V)

R-OH (VI)

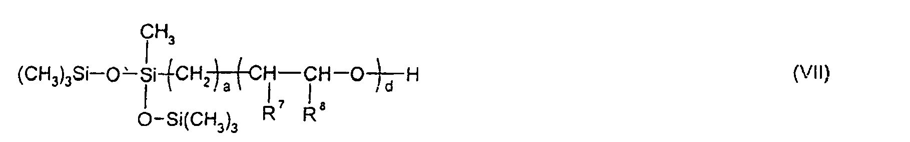

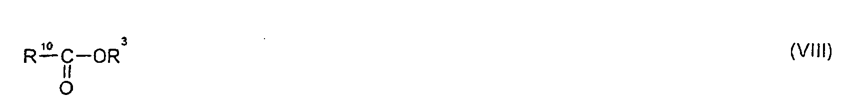

in which
all radicals R¹, independently of one another, are a methyl radical, an ethyl radical or an unsubstituted phenyl radical,
all radicals R², independently of one another, are H or -CH₃,
the radical R³ is hydrogen or a linear or branched alkyl radical having 1 to 14 carbon atoms, the radical R⁴ is H or is R¹,
the radical R⁵ is a radical R³ which is not hydrogen, or is a radical R³ which is not hydrogen and in which a hydrogen atom is replaced by the monovalent radical derived from ethylene oxide, all of the radicals R, independently of one another, are a radical of the formula (IX) or of the formula (X), 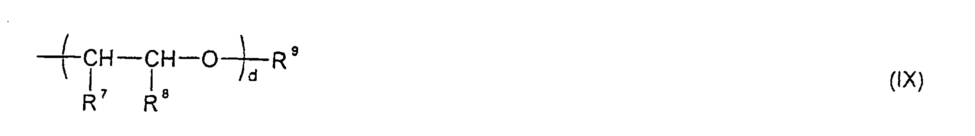 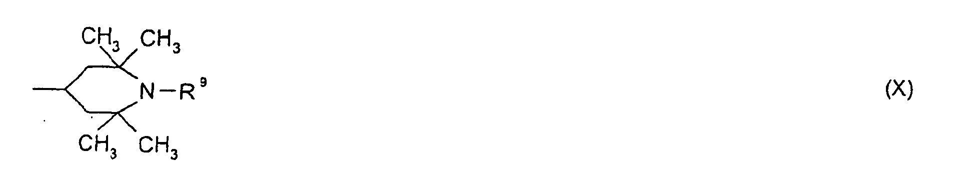
in which one of the radicals R⁷ and R⁸ is hydrogen and the other is hydrogen or a methyl group, the radical R⁹ is hydrogen or an alkyl radical having 1 to 16 carbon atoms, or where all radicals R, independently of one another, are hydrogen or a linear or branched alkyl radical having 1 to 18 carbon atoms which may have 1, 2 or 3 alkoxy groups, in particular methoxy groups or ethoxy groups, as substituents,
or where the radicals R are a radical of the formula (XI) 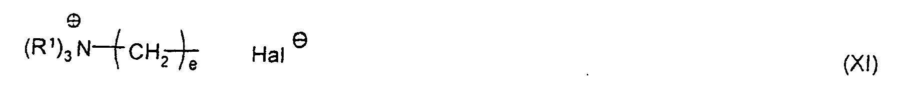
where R¹⁰ is a linear or branched alkyl radical having 1 to 4 carbon atoms,
where R¹⁰ is preferably a methyl or an ethyl group, or
where R¹⁰ is Ar or is Ar-CH₂-,
in which e is a number from 2 to 6,
Hal is Cl or Br,
Ar is the unsubstituted phenyl radical or an unsubstituted naphthyl radical or is a phenyl radical in which one or two hydrogen atoms are substituted by an alkyl radical having 1 to 4 carbon atoms,
a has the value 1, 2 or 3
b has the value 0, 1 or 2
c1 and c2, independently of one another, have the value 0 or 1
d is a number from 1 to 20,
for the treatment of fiber materials.

Wherever "silicon compounds according to the invention" is used below, these products specified above and described in more detail below are intended, i.e. "silicon compounds according to the invention" may be products which are formed by reacting a silane of the formula (I) or a mixture of such silanes with a silane of the formula (II) or with a mixture of such silanes in the specified molar ratio and which are not reacted further with other products. The expression "silicon compounds according to the invention", however, also includes products which are formed by further reaction of the silicon compounds formed primarily from formula (I) and formula (II) with formaldehyde, sulfuric acid, mixtures of acetic acid and low molecular weight alcohols or by further reaction with compounds of the formulae (III) to (VIII) or by further reaction with a polyorganosiloxane by means of an equilibration and/or condensation reaction.

The silicon compounds according to the invention have a number of advantageous properties:
1. They have a plurality of reactive centers which are present in the form of alkoxy, acyloxy and/or amino groups, and therefore have high reactivity toward cellulosic hydroxy groups. They can therefore be used for the highly effective crosslinking of textile fabrics which comprise cellulose fibers, e.g. in an amount of from 50 to 100% by weight. The cellulose fibers here may be present in a mixture with polyester, polyamide or polypropylene fibers. The fiber materials here are preferably textile fabrics in the form of wovens, knits or nonwovens.
   Silicon compounds according to the invention can also be used for treating cellulose-free or low-cellulose fiber materials. Suitable fiber materials are, in turn, preferably textile fabrics in the form of wovens, knits or nonwovens of polyester, polyamide or propylene fibers or mixtures of such fibers. Glass fiber articles or other articles made of glass can also be treated advantageously with silicon compounds according to the invention. Fiber materials in the form of textile fabrics can be treated in accordance with generally known methods. For example, a process which is highly suitable is one in which the textile fabric is passed through a bath, then quenched, dried at 90-110°C for 5 to 20 minutes and optionally condensed at a temperature in the range from 120°C to 160°C. Such processes are, inter alia, the known padding processes. The silicon compounds according to the invention and the modified polyorganosiloxanes described below in point 2 can, however, also be used advantageously for coating textile fabrics. The coating can take place by generally known methods.
2. On account of the presence of reactive groups, e.g. -OH or-NH groups, the silicon compounds which are formed by reacting a silane of the formula (I) or a mixture of such silanes with a silane of the formula (II) or with a mixture of such silanes in the specified molar ratio and which are not reacted further with other products or products which are formed by further reaction of the silicon compounds formed primarily from silanes of formula (I) and formula (II) with formaldehyde, sulfuric acid, mixtures of acetic acid and low molecular weight alcohols or by further reaction with compounds of the formulae (III) to (VIII) can be used for modifying known polyorganosiloxanes. For this, the silicon compounds as specified above are reacted in an equilibration or condensation reaction. Equilibration reactions and condensation reactions on siloxanes are known from the prior art. During equilibration, which usually proceeds in the presence of basic catalysts at a temperature in the range from 60 to 140°C, low molecular weight silicon compounds, e.g. silanes which comprise two or more alkoxy groups bonded directly to an Siatom, are reacted with polyorganosiloxanes. During the reaction, the unit -O-Si-O- originating from the low molecular weight silicon compound is incorporated into the polysiloxane chain. If such an equilibration reaction is to be carried out between silicon compounds as specified above and polyorganosiloxanes, the polyorganosiloxane used is preferably a polyorganosiloxane which has trimethylsilyl -(CH₃)₃Si-O- or hydroxydimethylsilyl-(HO(CH₃)₂Si-O-) end-groups. The polysiloxane chain can consist here of repeat -(CH₃)₂Si-O- units, in one or more of which a methyl group may be substituted by a functional group, e.g. a radical which comprises one or more amino groups.

During the condensation reaction, which is preferably carried out in a temperature range from 60 to 100°C, a low molecular weight silicon compound which comprises two or more alkoxy groups bonded to an Si atom is reacted with a polyorganosiloxane comprising OH groups. At the start of the condensation reaction, water may be present, e.g. in order to hydrolyze the alkoxy groups present in the low molecular weight silicon compound to give hydroxy groups. If silicon compounds as specified above are to be used for such a condensation reaction, the polyorganosiloxane used is preferably a linear polymer which has hydroxydimethylsilyl units HO(CH₃)₂Si-O- at both chain ends. Within the chain, the same units may be present as have been described above for the case of equilibration. In the described equilibration and/or condensation reactions, silanes of the formula (XII) can be co-used in addition to the silicon compounds as specified above.

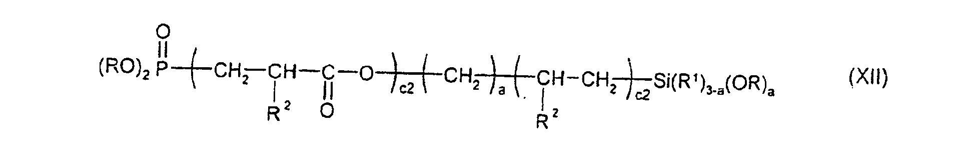

These silanes of the formula (XII) are described below.

If, during the equilibration or condensation, use is made of the co-use of silanes of the formula (XII), then the molar ratio of nitrogen atoms in the silanes according to the invention to phosphorus atoms in the silanes of the formula (XII) is preferably in the range from 3:1 to 1:1.

The polyorganosiloxanes modified by reaction with silicon compounds as specified above are likewise readily used for the treatment of fiber materials in the form of textile fabrics. Here, it is possible to achieve effects such as, for example, good anticrease properties, soft handle etc., with high permanency toward washing processes.

The specified modified polyorganosiloxanes are preferably used here in the form of aqueous dispersions. Suitable dispersants are the dispersants known from silicone chemistry, in particular nonionogenic dispersants such as ethoxylated relatively long-chain aliphatic alcohols.

Silicon compounds according to the invention can be prepared by reacting a silane of the formula (I) or a mixture of silanes of the formula (I) 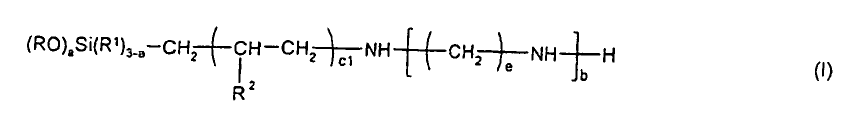 with a silane of the formula (II) or a mixture of silanes of the formula (II)

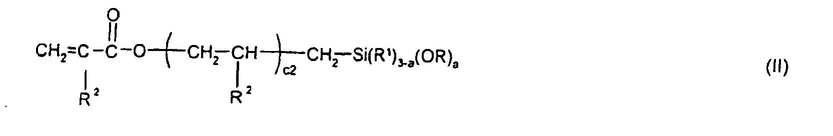

This reaction must be carried out in quantitative ratios such that the molar ratio of the total amount of silanes of the formula (I) to the total amount of silanes of the formula (II) is in the range from 5:1 to 1:5. It is preferably in the range from 3:1 to 1:2.

The reaction of silanes of the formula (I) with silanes of the formula (II) is preferably carried out at a temperature in the range from 40°C to 140°C. It can take place without use of a solvent, particularly if at least one of the starting compounds is liquid or readily miscible with the other starting compounds. In other cases it is possible to use an organic solvent in which the starting compounds are readily soluble and with which they do not chemically react. However, preference is given to a reaction without use of a solvent.

In many cases it is favorable to co-use a catalyst during the reaction of the silanes of the formula (I) with silanes of the formula (II). Catalysts which are particularly suitable are alkali metal alkoxides, such as sodium methoxide or sodium ethoxide, tin (IV) compounds, such as R₂SnO, titanates and vanadates of the formulae Ti(OR)₄, VO(OR)₃, where here R is in each case an alkyl radical having 1 to 4 carbon atoms, halides of metals, such as tin(IV) chloride, and bicyclic optionally unsaturated nitrogen compounds, as described in EP 933 399 A1, page 6, lines 37-40. In a number of cases it is favorable to carry out the reaction of compounds of the formula (I) with compounds of the formula (II) under reduced pressure.

In the formulae (I) and (II):
R is hydrogen or a linear or branched alkyl radical having 1 to 18 carbon atoms, or such an alkyl radical which has one or two or three methoxy groups or ethoxy groups as substituents or
a radical of the formula (IX) or of the formula (X) or of the formula (XI)

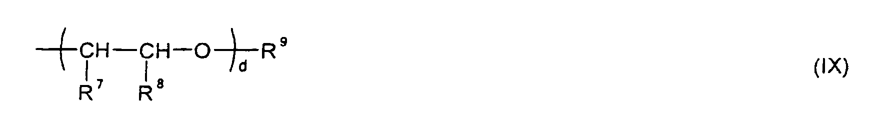

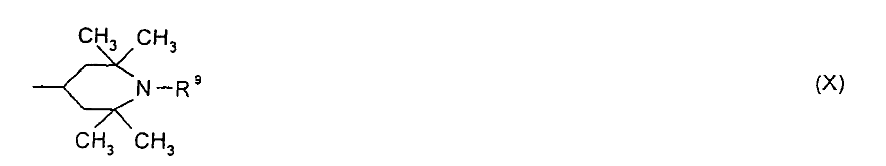

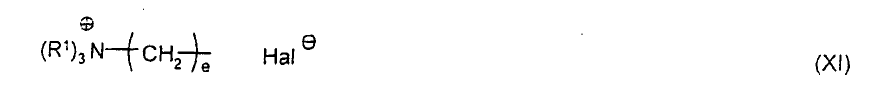

R¹ is a methyl radical, an ethyl radical or an unsubstituted phenyl radical
R² is hydrogen or methyl radical
a is the number 1, 2 or 3
b is one of the numbers 0, 1 or 2
c1 is the number 0 or 1
c2 is the number 0 or 1
e is a number from 2 to 6.

Here, a for the compounds of the formula (I) used can assume the same value as or a different value to the compounds of the formula (II) used.

It is to be assumed that the reaction of the silane of the formula (I) with the silane of the formula (II) takes place via a Michael addition, during which an NH bond of the formula (I) adds onto the C=C double bond of the formula (II).

In the formulae (VIII), (IX) and (X):
one of the radicals R⁷ and R⁸ is hydrogen and the other is hydrogen or a methyl group d is a number from 1 to 20
e is a number from 2 to 6
R⁹ is hydrogen or an alkyl radical having 1 to 4 carbon atoms
Hal is bromine or iodine.

Silanes of the formula (I) are commercially available, for example from the companies ABCR GmbH & Co. KG, Karlsruhe, Germany and Brenntag Eurochem GmbH, Germany (3-aminopropyldiethoxymethylsilane and N-aminoethyl-3-aminopropylmethyldimethoxysilane). In addition, such silanes can be prepared in a known manner by addition of alkyldialkoxyhydrogensilanes onto allyl halide and subsequent reaction with corresponding amines, or by reaction of alkyl hydrogendihalogensilanes with allyl chloride, subsequent substitution of the halogen atoms bonded directly to Si by radicals OR and then reaction with amines.

Silanes of the formula (II) are likewise commercially available; examples are products of the GENIOSIL series (Wacker Chemie GmbH, Germany), including GENIOSIL XL 32, or products from ABCR GmbH & Co., Karlsruhe, Germany.

The silicon compounds according to the invention which can be prepared by reacting silanes of the formula (I) with silanes of the formula (II) are very highly suitable for treating fiber materials in the form of textile fabrics such as wovens, knits or nonwovens. If the textile fabrics comprise significant amounts, e.g. 50 to 100% by weight, of cellulose fibers such as, for example, cotton, then a highly effective crosslinking of cellulose molecules can be achieved with silicon compounds according to the invention. In this process, after the application of the silicon compound, a drying step and, usually, also a condensation step are carried out, as described above.

If one or more of the radicals R in the silanes of the formula (I) or formula (II) is an alkyl radical with fewer than 6 carbon atoms, there is the possibility that the silanes of the formula (I) or formula (II) or the reaction products according to the invention from these two silanes relatively rapidly hydrolyze in aqueous systems. For this reason, reaction products are used in which at least one of the radicals present has fewer than 6 carbon atoms, preferably not in the form of aqueous systems, but in the form of a solution in liquid ammonia for treating the textile fabrics. The solution in liquid ammonia comprises here preferably 0.05 to 0.3 mol/l, in particular 0.08 to 0.15 mol/l, of reaction product of silane of the formula (I) with silane of the formula (II), and application to the textile fabric is preferably carried out as a bath application at a temperature in the range from -60° to -40°C, e.g. by means of padding processes, for which a catalyst can be co-used which is chosen from amines such as diazabicyclo[2.2.2]octane or 4-dimethylaminopyridine. The amount of catalyst added is here preferably 1 to 3% by weight, based on the total amount of the silicon compounds according to the invention present in the ammoniacal solution. Instead of a solution in liquid ammonia, however, in many cases it is also possible to use a solution of the silicon compounds according to the invention in a mixture of water and a low molecular weight aliphatic alcohol, even if one or more of the radicals R in the silicon compounds according to the invention which are used has fewer than 6 carbon atoms. The low molecular weight alcohol used for this should be present in an amount of from 20 to 80% by weight in the mixture of alcohol and water, and it comprises preferably 1 to 4 carbon atoms. Isopropanol is highly suitable.

If none of the radicals R in the silanes of the formula (I) and of the formula (II) is an alkyl radical having fewer than 6 carbon atoms, then an application in the form of a solution in liquid ammonia can likewise take place. Preferably, however, in this case the reaction products according to the invention of silanes of the formula (I) with silanes of the formula (II) are used, inter alia for reasons of cost and on account of easier handling, in the form of an aqueous solution or dispersion. Of suitability for dispersion in water are customary nonionogenic dispersants, such as ethoxylated relatively long-chain alcohols or cationic dispersants, such as quaternary ammonium salts. The aqueous solutions or dispersions are likewise preferably used by means of a bath, e.g. via padding, and comprise preferably 0.05 to 0.3 mol/l, in particular 0.08 to 0.15 mol/l, of reaction product from the corresponding silanes.

The use of silicon compounds according to the invention includes not only the use of those silicon compounds which can be obtained by the described reaction of silanes of the formula (I) with silanes of the formula (II). Rather, the present invention also provides the use of silicon compounds which can be obtained from the specified reaction products by further reaction with certain products. These certain products are chosen from formaldehyde, sulfuric acid, mixtures of acetic acid and low molecular weight alcohols, and compounds of the formulae (III), (IV), (V), (VI), (VII) and (VIII)

Ar-SO₃- R³ (III)

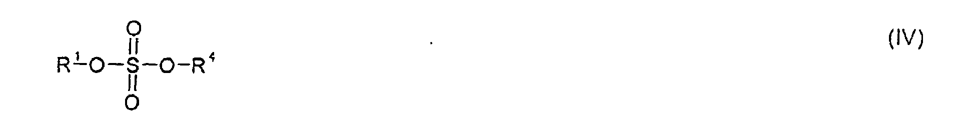

R⁵-Hal (V)

R-OH (VI)

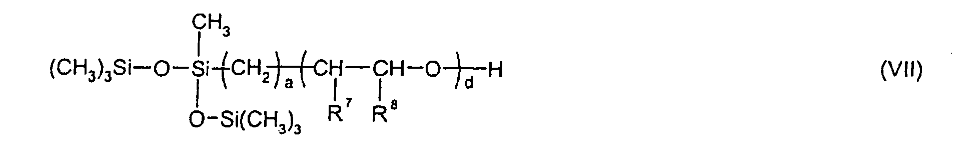

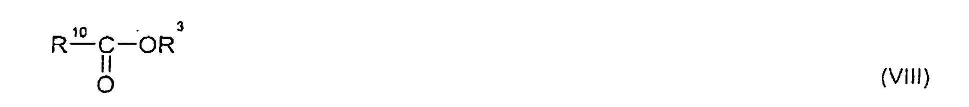

In the case of reaction with formaldehyde, the -CH₂OH radicals which form can then be etherified with a monohydric or polyhydric aliphatic alcohol having 1 to 6 carbon atoms. The low molecular weight alcohol which can be used as a mixture with acetic acid is likewise a monohydric or polyhydric aliphatic alcohol having 1 to 6 carbon atoms. In the formulae (III) to (VIII)
R³ is hydrogen or a linear or branched alkyl radical having 1 to 14 carbon atoms. R³ is preferably an alkyl radical having 1 to 8 carbon atoms.
R⁴ is hydrogen or R¹
R⁵ has the same meaning as R³, with the exception of hydrogen, or is a radical R³ which is not hydrogen and in which a hydrogen atom is replaced by the monovalent radical which is derived from ethylene oxide by removing a hydrogen atom,
R¹⁰ is a linear or branched alkyl radical having 1 to 6 carbon atoms or Ar- or Ar-CH₂-, where R¹⁰ is preferably a methyl or ethyl radical,
Ar is a monovalent radical which is derived from benzene, toluene or naphthalene or dialkylbenzene by removing a hydrogen atom, where the naphthyl radical may be the 1-naphthyl or 2-naphthyl radical and where dialkylbenzene is understood as meaning a benzene substituted by 2 alkyl groups having in each case 1 to 4 carbon atoms.
In the formulae (III) to (VIII), R¹, R⁷, R⁸, R⁹, a and d also have the meanings specified above and in claim 1.

In the compounds of the formula (III), the radical Ar is bonded directly to the sulfur atom, these compounds are thus sulfonic acids or derivatives thereof; they are not sulfites or hydrogensulfites.

The described further reactions of the products which are formed by the reaction of compounds of the formula (I) with compounds of the formula (II) can likewise advantageously be carried out using a catalyst, in particular tetraalkyl titanate, if alkoxy radicals have been replaced, i.e. for example in the case of a reaction with a compound of the formula (VI). In particular, the further reaction with compounds of the formula (VI) leads to technically excellent products. Highly suitable compounds of the formula (VI) here are low molecular weight monohydric alcohols having 1 to 4 carbon atoms.
Following the reaction with these alcohols, which are preferably used in excess, water and a little water-miscible organic solvent and optionally acetic acid are added, and the silicon compound according to the invention is isolated from this two-phase mixture.

After the specified reaction with a low molecular weight monohydric alcohol, the procedure may also involve mixing the resulting reaction product with a polysiloxane which comprises polyoxyalkylene groups and stirring this mixture in water.

The quantitative ratios which are used in the reaction of the products which are formed by the reaction of silanes of the formula (I) with silanes of the formula (II), with compounds of the formulae (III) to (V) can correspond to equivalent amounts so that all of the nitrogen atoms which are present following the reaction of the compound of formula (I) with the compound of formula (II) react completely with a compound of the formula (III) to (V) or the amounts of compounds of the formulae (III) to (V) may be lower than corresponds to equivalent amounts. The expression "complete" here is understood as meaning that after the reaction, a hydrogen atom is no longer bonded to any of the nitrogen atoms. In the case of alkylation reactions, the quantitative ratios can also be chosen so that all or some of the nitrogen atoms are quaternized. If the products which form during the reaction of compounds of the formula (I) with compounds of the formula (II) are further reacted with products of the formula (VI), of the formula (VII) or of the formula (VIII) or with products of the formula (III), or (IV) in which R³ = H or R⁴ = H, then the amounts can be chosen so that all the radicals OR which are present in the reaction products of compounds of the formula (I) with compounds of the formula (II) are substituted by other radicals. It is, however, also possible to use smaller amounts so that such a substitution takes place only partially.
The specified reactions can be carried out by methods which are known from organic chemistry.

It is assumed that during the reaction with a compound of the formula (III), of the formula (IV) or of the formula (V), an alkylation or quaternization of one or more nitrogen atoms results which are present in the reaction products of the silanes of the formula (I) with silanes of the formula (II).
It is also assumed that during the reaction with a compound of the formula (VI), an exchange of one or more radicals R which are bonded to terminal silicon atoms by one or more other radicals R results. Consequently, for example, short-chain radicals R which were present in silanes of the formula (I) and/or the formula (II) can be replaced by longer-chain radicals R. This substitution can be catalyzed by acids or bases, optionally also by enzymes. The further reaction of the products which form during the reaction of silanes of the formula (I) with silanes of the formula (II) with compounds of the formula (VI) can also advantageously be catalyzed by titanium or vanadium compounds, such as Ti(OA)₄, VO(OA)₃ and (A)₂SnO in which A is the n-butyl or the isopropyl radical. Also highly suitable as catalyst for this reaction is zirconium tetraacetylacetonate, i.e. the compound ZrX₄ in which X is the anion of the enol form of acetylacetone. Thus, silicon compounds according to the invention can be obtained which do not have to be used in the form of solutions in liquid ammonia for cellulose crosslinking, but can be used in the form of aqueous solutions or dispersions because no short-chain alkoxy radicals are bonded to the silicon atoms, i.e. no alkoxy radicals with fewer than 6 carbon atoms. The further reaction of the products which form by the reaction of compounds of the formula (I) with compounds of the formula (II) with compounds of the formula (VI) can, if R in formula (VI) is an unsubstituted alkyl radical, be carried out in accordance with the methods described in WO 02/070528 and in J. Gulinski et al, Applied Organometallic Chemistry 2001, 15, pages 649-657 ("Synthesis of organofunctional silanes with sterically hindered substituents at silicon atoms"). Products of the formula (VII) are available commercially, e.g. from Goldschmidt, Essen, Germany under the name TEGOPREN 5878.

The silicon compounds according to the invention , as mentioned above, are used for treating textile fabrics made of fiber materials. For this, they are preferably used in the form of solutions in liquid ammonia or in the form of aqueous solutions or dispersions. The solutions or dispersions can comprise further additives, as are known in the field of textile finishing. Examples of such additives are fabric softeners, such as, for example, aminofunctional polyorganosiloxanes or dispersible waxes, flame retardants, such as, for example, phosphorus or nitrogen compounds, and polymers which comprise perfluoroalkyl radicals, for achieving water- and oil-repelling properties on the textiles.
In cases where a flame-inhibiting effect is to be achieved during the treatment of the fiber materials, it is favorable to use the silicon compounds according to the invention in combination with silanes comprising phosphono units. Of high suitability for this purpose are silanes of the formula (XII)

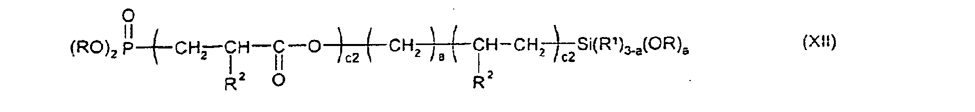

In this formula, R, R¹, R², a, c2 and e have the meanings given above and in claim 1. Compounds of the formula (XII) can be prepared by reacting dialkyl phosphites at 0°C with metallic sodium and reacting the product formed with silanes of the formula (II). This synthesis is found in the Chemical Abstracts citation with the Accession Number (AN) 109:231291 = summary of the JP laid-open specification 63/051393. If, for the treatment of textile fabrics, besides silicon compounds according to the invention, use is also additionally made of silanes comprising phosphono units, e.g. those of the formula (XI), a preferred embodiment is one in which the silicon compounds and the silanes comprising phosphono units are used in quantitative ratios such that the molar ratio of nitrogen atoms in the silicon compounds according to one or more of claims 1 to 5 to phosphorus atoms in the silanes of the formula (XII) is in the range from 1:1 to 3:1.
The modified polyorganosiloxanes according to the invention which have been described above and which can be obtained by reacting silicon compounds according to the invention with polyorganosiloxanes are also used advantageously in combination with silanes of the formula

(XII). These silanes comprising phosphono units of the formula (XII) can also in this case bring about flame-inhibiting properties of the treated textile fabrics. If use is made of this possibility, then the modified polyorganosiloxanes and the silanes of the formula (XII) are preferably used in quantitative ratios such that in the combination of the specified products there is a molar ratio of nitrogen atoms to phosphorus atoms in the range from 3:1 to 1:1.
It is, however, also quite possible even during the synthesis of the modified polyorganosiloxanes to additionally co-use silanes of the formula (XII) which then take part in the above-described equilibration and/or condensation reaction. In this case, the amount of additionally used silane of the formula (XII) is preferably such that the molar ratio of nitrogen atoms to phosphorus atoms is in the range from 3:1 to 1:1.
The invention will now be illustrated by reference to working examples.

### Example 1

In a reaction vessel fitted with heating device, stirrer and reflux condenser, 10 g of a silane according to formula (I) from claim 1 where

b=1, e=2, c1=1, a=2, R=CH₃, R¹=CH₃

and
9.95 g of a silane according to formula (II) from claim 1 where R²=CH₃, R=CH₃, R¹=CH₃, a=2, c2=0 are mixed together, heated to 60°C and held at this temperature for 4 hours with stirring. After cooling, a colorless, transparent liquid is obtained.

### Example 2

Example 1 is repeated with the following differences: 9.4 g of the abovementioned silane of the formula (I) are used. 10.6 g of a silane of the formula (II) different from that in Example 1 are used, namely a silane where c2=1, the other parameters of the silane are the same as in Example 1. Furthermore, 1g of a 30% strength solution of sodium methoxide in methanol is added to the mixture of the silanes.
This likewise results in a colorless, transparent liquid.

### Example 3

The procedure is as in Example 1, but using a different silane of the formula (I), namely a silane where R= -CH₂-CH₃, b=0. The other parameters of this silane of the formula (I) are the same as in Example 1.
9.7 g of this silane of the formula (I) are mixed with 10.35 g of the silane of the formula (II) according to Example 1.
The resulting product is a colorless, clear liquid.

### Example 4

Example 3 is repeated but using the silane of the formula (II) according to Example 2 instead of the silane of the formula (II) specified in Example 3.
For this, 9.0 g of silane of the formula (I) are mixed with 10.9 g of silane of the formula (II). Here too a clear, colorless liquid is obtained.

### Example 5

Example 3 is repeated using 19.3 g of silane of the formula (I) and 20.6 g of silane of the formula (II). In addition, 1 ml of sodium methoxide solution (30% in methanol) are added dropwise over the course of 4 hours.
This results in a yellow, cloudy liquid.

### Example 6

Example 1 is repeated but using 20.4 g of the silane of the formula (II) and 15.1 g of a silane of the formula (I). This silane of the formula (I) is different from that used in Example 1. It is characterized by

R=CH₃, a=3, c1=0, b=0

This gives a clear, colorless liquid.

### Example 7

Example 6 is repeated with 12.2 g of silane of the formula (I), using 17.8 g of a silane of the formula (II). This silane of the formula (II) is characterized by

R=CH₃, a=3, c2=0, R²=CH₃

This gives a clear, colorless liquid.

### Example 8

Further reaction with a compound of the formula (VI) 76.5 g of the product obtained according to Example 4 and 24 g of isopropanol (= product of the formula (VI)) are mixed together. 0.25 g of tetrakis-n-butyl orthotitanate (catalyst) is added to the mixture. The resulting mixture is stirred at 70°C under reduced pressure for 4 hours.
This gives a clear, colorless liquid.

### Example 9

Reaction of a silicon compound which is obtained from silane of the formula (I) and silane of the formula (II) with polyorganosiloxane.
2.6 g of the product obtained according to Example 2,
2.4 g of the silane of the formula (II) which is used in Example 2,
0.5 g of the silane of the formula (II) which is used in Example 1,
94.3 g of α,ω-dihydroxypolydimethylsiloxane (CT 101 M from Wacker, Germany) and
0.2 g of 30% strength methanolic solution of sodium methoxide (catalyst)
   are mixed together and heated to 90°C with stirring under a nitrogen atmosphere and held under reflux at 90°C for 5 minutes. Subsequently, distillation is carried out under reduced pressure (100 mbar), further 0.1 g of the catalyst solution is added and the mixture is distilled again (about 3 hours) until a transparent liquid is obtained whose viscosity at 20°C has a value of about 12 000 mPa·s.

### Example 10

### Treatment of a fiber material with a composition according to the invention

### a) Preparation of a composition according to the invention

52 g of the product obtained according to Example 6, 48 g of isopropanol and 0.5 g of tetrakis-n-butyl orthotitanate (catalyst) are mixed together. Isopropanol functions here as a compound of the formula (VI). A colorless, transparent solution is formed. This is held at 80°C for 4 hours under reflux and with stirring. A colorless, transparent solution again results. 19 g of methyl isobutyl ketone (MIBK) are added to 32 g of this solution. A transparent solution immediately forms. 45 g of water and 3 g of 60% strength acetic acid are then added with vigorous stirring. The resulting mixture is stirred at room temperature for 2 hours. A two-phase mixture is formed which is separated using a separating funnel. The lower aqueous phase is further used for the treatment of fiber material.

### b) Treatment of a cotton fabric

A liquor is prepared which comprises, per liter,
360 g of the lower (aqueous) phase from Example 10a
1 ml of 60% strength acetic acid
2 g of catalyst (diazabicyclo[2.2.2]octane).

This liquor was used to treat a fabric made of 100% cotton using a padding process. Following application of the treatment liquid, the fabric was dried at 110°C for 10 minutes and then condensed at 150°C for 5 minutes.

## Claims

1. Use of a silicon compound preparable by reacting a silane of the formula (I) or a mixture of silanes of the formula (I) 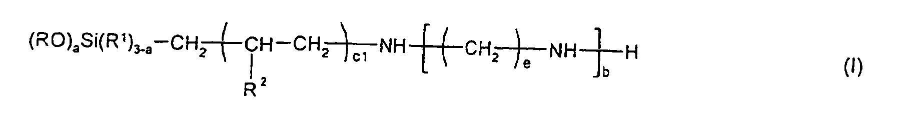 with a silane of the formulae (II) or a mixture of silanes of the formula. (II) 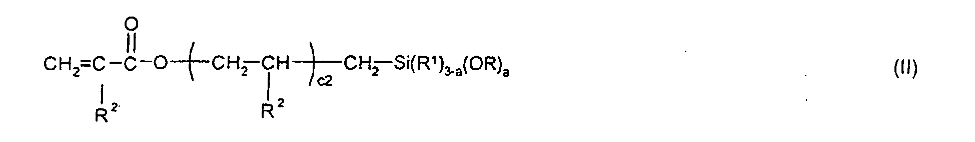 where the molar ratio of silanes of the formula (I) used to silanes of the formula (II) used is 5:1 to 1:5, preferably 3:1 to 1:2,
optional further reaction of the resulting products with compounds which are chosen from formaldehyde, sulfuric acid, mixtures of acetic acid and low molecular weight alcohols, and compounds of the formulae (III), (IV), (V), (VI), (VII) and (VIII) where, in the case of the reaction with formaldehyde, the -CH₂OH radicals which form may have been etherified with a monohydric or polyhydric aliphatic alcohol having 1 to 6 carbon atoms,
and optional further reaction with a polyorganosiloxane by means of an equilibration and/or condensation reaction,
Ar-SO₃- R³ (III) 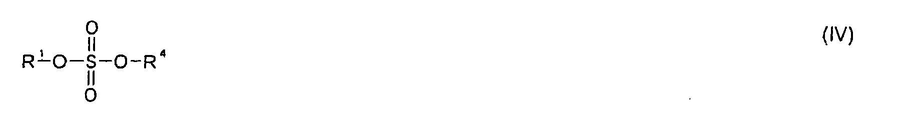
R⁵-Hal (V)
R-OH (VI) 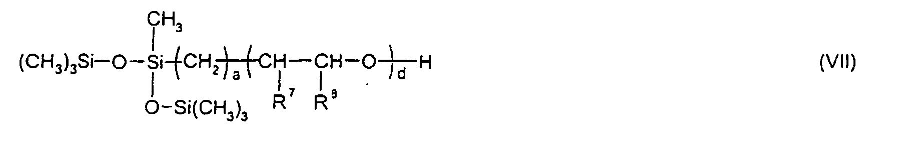 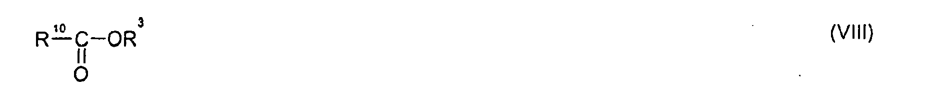
in which
all radicals R¹, independently of one another, are a methyl radical, an ethyl radical or an unsubstituted phenyl radical,
all radicals R², independently of one another, are H or -CH₃,
the radical R³ is hydrogen or a linear or branched alkyl radical having 1 to 14 carbon atoms, the radical R⁴ is H or is R¹,
the radical R⁵ is a radical R³ which is not hydrogen, or is a radical R³ which is not hydrogen and in which a hydrogen atom is replaced by the monovalent radical derived from ethylene oxide, all of the radicals R, independently of one another, are a radical of the formula (IX) or of the formula (X), 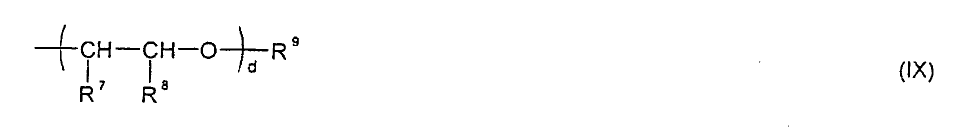 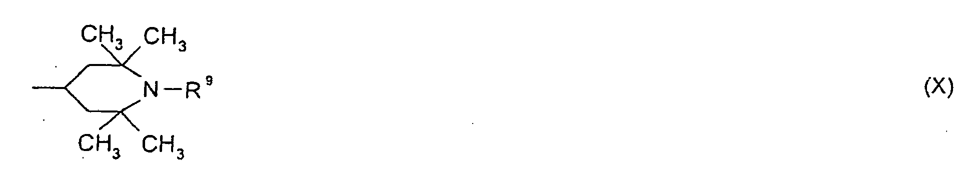
in which one of the radicals R⁷ and R⁸ is hydrogen and the other is hydrogen or a methyl group, the radical R⁹ is hydrogen or an alkyl radical having 1 to 16 carbon atoms,
or where all radicals R, independently of one another, are hydrogen or a linear or branched alkyl radical having 1 to 18 carbon atoms which may have 1, 2 or 3 methoxy groups or ethoxy groups as substituents,
or where the radicals R are a radical of the formula (XI) 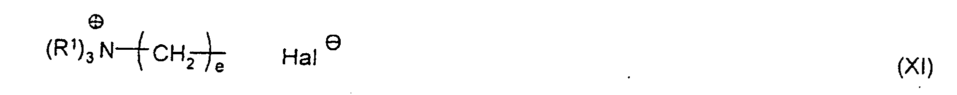
where R¹⁰ is a linear or branched alkyl radical having 1 to 4 carbon atoms,
where R¹⁰ is preferably a methyl or an ethyl group, or
where R¹⁰ is Ar or is Ar-CH₂-,
in which e is a number from 2 to 6,
Hal is Cl or Br,
Ar is the unsubstituted phenyl radical or an unsubstituted naphthyl radical or is a phenyl radical in which one or two hydrogen atoms are substituted by an alkyl radical having 1 to 4 carbon atoms,
a has the value 1, 2 or 3,
b has the value 0, 1 or 2,
c1 and c2, independently of one another, have the value 0 or 1,
d is a number from 1 to 20,
for the treatment of fiber materials.

2. The use as claimed in claim 1, **characterized in that** the reaction of the silane of the formula (I) with the silane of the formula (II) is carried out at a temperature in the range from 40 to 140°C.

3. The use as claimed in claim 1 or 2, **characterized in that** the reaction of the silane of the formula (I) with the silane of the formula (II) is carried out without using a solvent.

4. The use as claimed in one or more of claims 1 to 3, **characterized in that** the reaction of the silane of the formula (I) with the silane of the formula (II) is carried out in the presence of a catalyst.

5. The use as claimed in claim 4, **characterized in that** the catalyst is chosen from sodium methoxide or sodium ethoxide, tin(IV) chloride.

6. The use as claimed in one or more of claims 1 to 5, **characterized in that** the silicon compounds are used in the form of a solution in liquid ammonia or in the form of a solution or dispersion in water.

7. The use as claimed in one or more of claims 1 to 6, **characterized in that** the silicon compounds are used together with silanes comprising phosphono units.

8. The use as claimed in claim 7, **characterized in that** the silanes comprising phosphono units are chosen from compounds of the formula (XII) 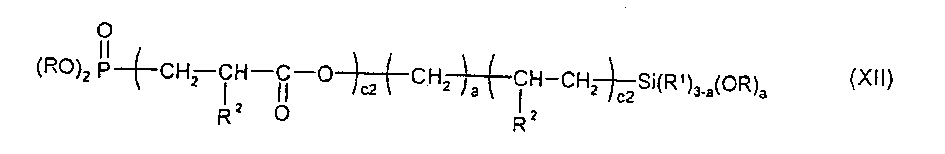
in which R, R¹, R², a and c2 have the meanings given in claim 1.

9. The use as claimed in claim 7 or 8, **characterized in that** the silicon compounds and the silanes comprising phosphono units are used in quantitative ratios such that the molar ratio of nitrogen atoms in the silicon compounds according to one or more of claims 1 to 5 to phosphorus atoms in the silanes of the formula (XII) is in the range from 1:1 to 3:1.

10. The use as claimed in one or more of claims 1 to 9, **characterized in that** the fiber materials are textile fabrics in the form of wovens, knits or nonwovens.

11. The use as claimed in one or more of claims 1 to 10, **characterized in that** the fiber materials consist of cellulose, polyester, polyamide, polypropylene or of mixtures of these fibers.

12. The use as claimed in one or more of claims 1 to 11, **characterized in that** the polyorganosiloxane has trimethylsilyl or hydroxy end-groups.

13. The use as claimed in one or more of claims 1 to 12, **characterized in that** silanes of the formula (XII) are additionally co-used during the equilibration and/or condensation reaction.

## Patentansprüche

1. Verwendung einer Siliciumverbindung, herstellbar **dadurch**, dass man ein Silan der Formel (I) oder ein Gemisch von Silanen der Formel (I) 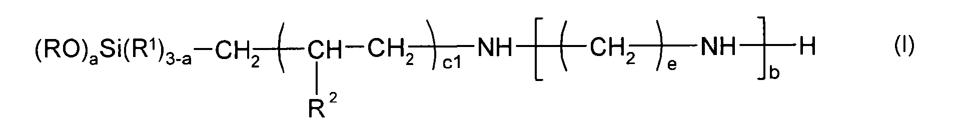 mit einem Silan der Formel (II) oder einem Gemisch von Silanen der Formel (II) umsetzt 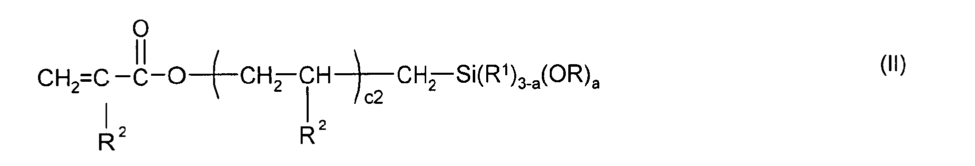
wobei das molare Verhältnis von eingesetzten Silanen der Formel (I) zu eingesetzten Silanen der Formel (II) 5:1 bis 1:5 beträgt, vorzugsweise 3:1 bis 1:2,
gegebenenfalls weiterer Umsetzung der erhaltenen Produkte mit Verbindungen, die ausgewählt sind aus Formaldehyd, Schwefelsäure, Mischungen aus Essigsäure und niedrigmolekularen Alkoholen, und Verbindungen der Formeln (III), (IV), (V), (VI), (VII) und (VIII) wobei im Fall der Umsetzung mit Formaldehyd die entstehenden -CH₂OH-Reste mit einem einwertigen oder mehrwertigen aliphatischen Alkohol mit 1 bis 6 Kohlenstoffatomen verethert worden sein können,
und gegebenenfalls weiterer Umsetzung mit einem Polyorganosiloxan mittels einer Äquilibrierungs- und/oder Kondensationsreaktion,
Ar-SO₃- R³ (III) 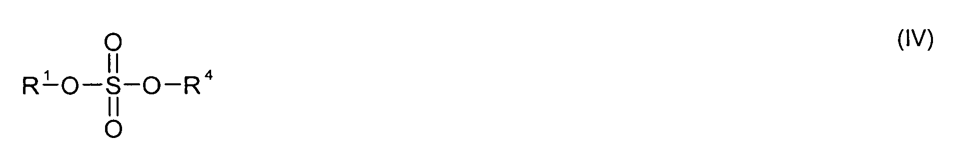
R⁵-Hal (V)
R-OH (VI) 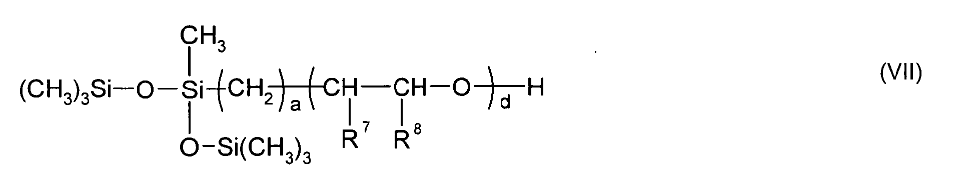 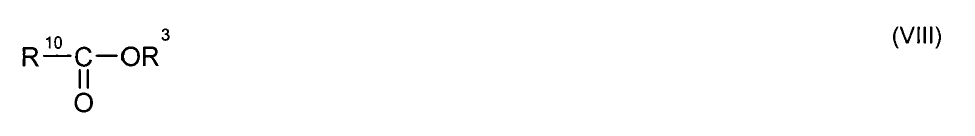
worin
alle Reste R¹ unabhängig voneinander für einen Methylrest, einen Ethylrest oder einen unsubstituierten Phenylrest stehen,
alle Reste R² unabhängig voneinander für H oder -CH₃ stehen,
der Rest R³ für Wasserstoff oder einen linearen oder verzweigten Alkylrest mit 1 bis 14 Kohlenstoffatomen steht,
der Rest R⁴ für H oder für R¹ steht,
der Rest R⁵ für einen Rest R³ steht, der nicht für Wasserstoff steht, oder für einen Rest R³, der nicht für Wasserstoff steht und in dem ein Wasserstoffatom durch den einwertigen, von Ethylenoxid abgeleiteten Rest ersetzt ist,
alle Reste R unabhängig voneinander für einen Rest der Formel (IX) oder der Formel (X) stehen, 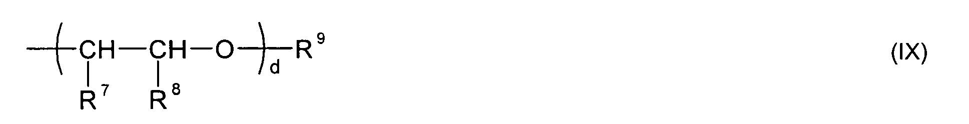 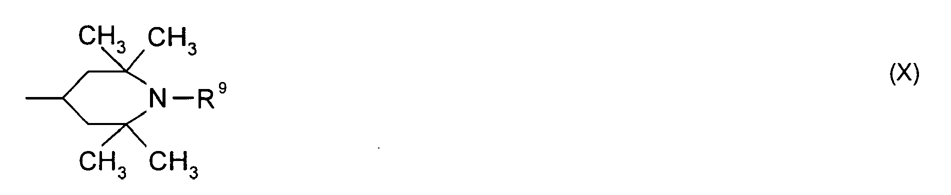
worin einer der Reste R⁷ und R⁸ für Wasserstoff und der andere für Wasserstoff oder eine Methylgruppe steht,
der Rest R⁹ für Wasserstoff oder einen Alkylrest mit 1 bis 16 Kohlenstoffatomen steht, oder wobei alle Reste R unabhängig voneinander für Wasserstoff oder für einen linearen oder verzweigten Alkylrest mit 1 bis 18 Kohlenstoffatomen stehen, der eine, zwei oder drei Methoxygruppen oder Ethoxygruppen als Substituenten aufweisen kann, oder wobei die Reste R für einen Rest der Formel (XI) stehen 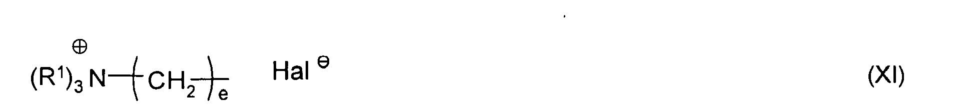
wobei R¹⁰ für einen linearen oder verzweigten Alkylrest mit 1 bis 4 Kohlenstoffatomen steht,
wobei R¹⁰ bevorzugt für eine Methyl- oder eine Ethylgruppe steht, oder
wobei R¹⁰ für Ar oder für Ar-CH₂- steht,
worin e eine Zahl von 2 bis 6 ist,
Hal für Cl oder Br steht,
Ar für den unsubstituierten Phenylrest oder einen unsubstituierten Naphthylrest steht oder für einen Phenylrest, in dem ein oder zwei Wasserstoffatome durch einen Alkylrest mit 1 bis 4 Kohlenstoffatomen substituiert sind,
a den Wert 1, 2 oder 3 besitzt,
b den Wert 0, 1 oder 2 besitzt,
c1 und c2 unabhängig voneinander den Wert 0 oder 1 besitzen,
d eine Zahl von 1 bis 20 ist,
zur Behandlung von Fasermaterialien

2. Verwendung einer Siliciumverbindung nach Anspruch 1, **dadurch gekennzeichnet, dass** die Umsetzung des Silans der Formel (I) mit dem Silan der Formel (II) bei einer Temperatur im Bereich von 40 bis 140°C durchgeführt wird.

3. Verwendung einer Siliciumverbindung nach Anspruch 1 oder 2, **dadurch gekennzeichnet, dass** die Umsetzung des Silans der Formel (I) mit dem Silan der Formel (II) ohne Verwendung eines Lösungsmittels durchgeführt wird.

4. Verwendung einer Siliciumverbindung nach einem oder mehreren der Ansprüche 1 bis 3, **dadurch gekennzeichnet, dass** die Umsetzung des Silans der Formel (I) mit dem Silan der Formel (II) in Gegenwart eines Katalysators durchgeführt wird.

5. Verwendung einer Siliciumverbindung nach Anspruch 4, **dadurch gekennzeichnet, dass** der Katalysator ausgewählt ist aus Natriummethylat oder -ethylat, Zinn (IV) chlorid.

6. Verwendung nach einem oder mehreren der Ansprüche 1 bis 5, **dadurch gekennzeichnet, dass** die Siliciumverbindungen in Form einer Lösung in flüssigem Ammoniak oder in Form einer Lösung oder Dispersion in Wasser eingesetzt werden.

7. Verwendung nach einem oder mehreren der Ansprüche 1 bis 6, **dadurch gekennzeichnet, dass** die Siliciumverbindungen zusammen mit Phosphonoeinheiten enthaltenden Silanen eingesetzt werden.

8. Verwendung nach Anspruch 7, **dadurch gekennzeichnet, dass** die Phosphonoeinheiten enthaltenden Silane aus Verbindungen der Formel (XII) ausgewählt sind, 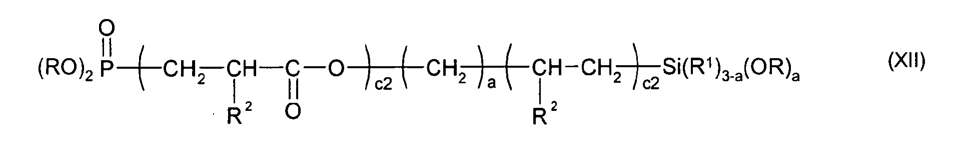 worin R, R¹, R², a und c2 die in Anspruch 1 genannten Bedeutungen besitzen.

9. Verwendung nach Anspruch 7 oder 8, **dadurch gekennzeichnet, dass** die Siliciumverbindungen und die Phosphonoeinheiten enthaltenden Silane in solchen Mengenverhältnissen eingesetzt werden, dass das molare Verhältnis von Stickstoffatomen in den Siliciumverbindungen gemäß einem oder mehreren der Ansprüche 1 bis 5 zu Phosphoratomen in den Silanen der Formel (XII) im Bereich von 1:1 bis 3:1 liegt.

10. Verwendung nach einem oder mehreren der Ansprüche 1 bis 9, **dadurch gekennzeichnet, dass** die Fasermaterialien textile Flächengebilde in Form von Geweben, Maschenwaren oder Nonwovens sind.

11. Verwendung nach einem oder mehreren der Ansprüche 1 bis 10, **dadurch gekennzeichnet, dass** die Fasermaterialien aus Cellulose, Polyester, Polyamid, Polypropylen oder aus Mischungen dieser Fasern bestehen.

12. Verwendung nach einem oder mehreren der Ansprüche 1 bis 11, **dadurch gekennzeichnet, dass** das Polyorganosiloxan Trimethylsilyl- oder Hydroxy-Endgruppen besitzt.

13. Verwendung nach einem oder mehreren der Ansprüche 1 bis 12, **dadurch gekennzeichnet, dass** bei der Äquilibrierungs- und/oder Kondensationsreaktion zusätzlich Silane der Formel (XII) mitverwendet werden.

## Revendications

1. Utilisation pour le traitement de matières fibreuses d'un composé du silicium pouvant être préparé par réaction d'un silane de la formule (I) ou d'un mélange de silanes de la formule (I) : 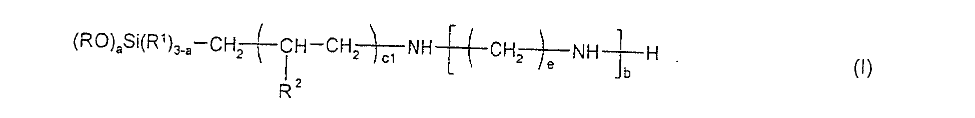 avec un silane de la formule (II) ou un mélange de silanes de la formule (II) : 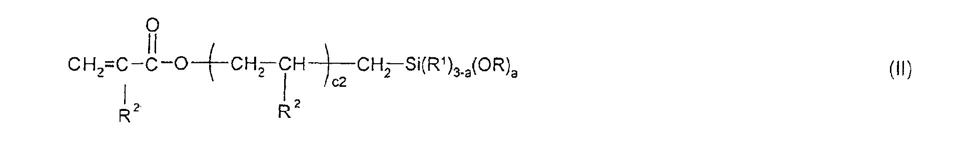
le rapport molaire de silanes de la formule (I) utilisés aux silanes de la formule (II) utilisés étant de 5:1 à 1:5, de préférence de 3:1 à 1:2,
nouvelle réaction facultative des produits résultants avec des composés qui sont choisis parmi le formaldéhyde, l'acide sulfurique, les mélanges d'acide acétique et d'alcools de faible masse moléculaire, et des composés des formules (III), (IV), (V), (VI), (VII) et (VIII) où, dans le cas de la réaction avec le formaldéhyde, les radicaux -CH₂OH qui se forment peuvent avoir été éthérifiés par un alcool aliphatique monovalent ou polyvalent ayant 1 à 6 atomes de carbone,
et nouvelle réaction facultative avec un polyorganosiloxane au moyen d'une réaction d'équilibrage et/ou de condensation,
Ar-SO₃- R³ (III) 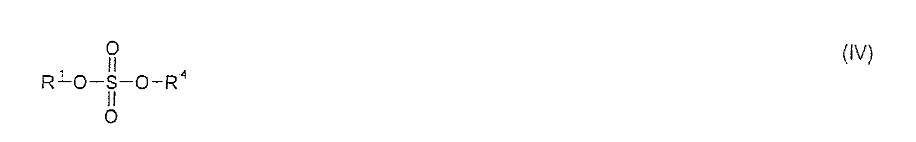
R⁵- Hal (V)
R-OH (VI) 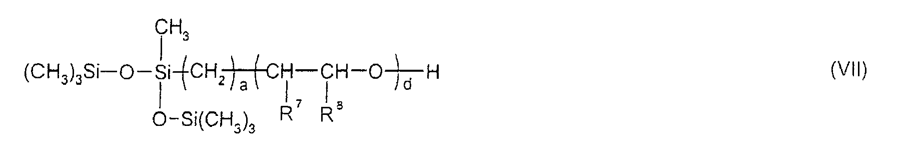 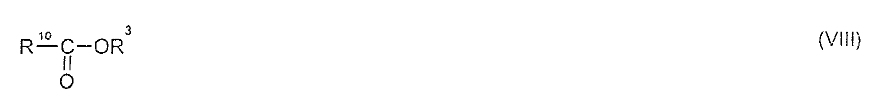
formules dans lesquelles
tous les radicaux R¹, indépendamment les uns des autres, représentent un radical méthyle, un radical éthyle ou un radical phényle non substitué ;
tous les radicaux R², indépendamment les uns des autres, représentent H ou -CH₃;
le radical R³ représente hydrogène ou un radical alkyle linéaire ou ramifié ayant 1 à 14 atomes de carbone ;
le radical R⁴ représente H ou représente R¹ ;
le radical R⁵ est un radical R³ qui ne représente pas hydrogène, ou est un radical R³ qui ne représente pas hydrogène et dans lequel un atome d'hydrogène est remplacé par le radical monovalent issu de l'oxyde d'éthylène,
tous les radicaux R, indépendamment les uns des autres, représentent un radical de la formule (IX) ou de la formule (X) : 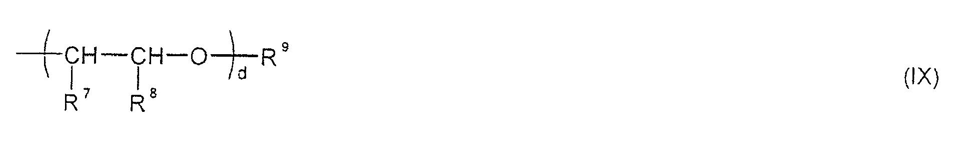 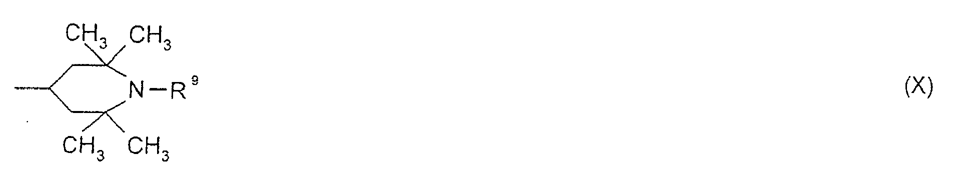
formules dans lesquelles l'un des radicaux R⁷ et R⁸ représente hydrogène et l'autre représente hydrogène ou un groupe méthyle,
le radical R⁹ représente hydrogène ou un radical alkyle ayant 1 à 16 atomes de carbone ;
ou bien où tous les radicaux R, indépendamment les uns des autres, représentent hydrogène ou un radical alkyle linéaire ou ramifié ayant 1 à 18 atomes de carbone qui peut avoir 1, 2 ou 3 groupes méthoxy ou groupes éthoxy en tant que substituants,
ou bien où les radicaux R sont un radical de la formule (XI) : 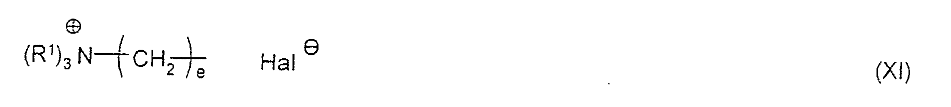
où R¹⁰ représente un radical alkyle linéaire ou ramifié ayant 1 à 4 atomes de carbone,
où R¹⁰ représente, de préférence, un groupe méthyle ou un groupe éthyle, ou
où R¹⁰ représente Ar ou représente Ar-CH₂- ;
e étant un nombre de 2 à 6 ;
Hal représente Cl ou Br ;
Ar représente le radical phényle non substitué ou un radical naphtyle non substitué ou représente un radical phényle dans lequel un ou deux atomes d'hydrogène sont substitués par un radical alkyle ayant 1 à 4 atomes de carbone ; a a la valeur 1, 2 ou 3 ;
b a la valeur 0, 1 ou 2 ;
c1 et c2, indépendamment l'un de l'autre, ont la valeur 0 ou 1 ;
d est un nombre de 1 à 20.

2. Utilisation selon la revendication 1, **caractérisée par le fait que** la réaction du silane de la formule (I) avec le silane de la formule (II) est effectuée à une température se situant dans la plage de 40 à 140°C.

3. Utilisation selon l'une des revendications 1 ou 2, **caractérisée par le fait que** la réaction du silane de la formule (I) avec le silane de la formule (II) est effectuée sans utilisation d'un solvant.

4. Utilisation selon l'une ou plusieurs des revendications 1 à 3, **caractérisée par le fait que** la réaction du silane de la formule (I) avec le silane de la formule (II) est effectuée en présence d'un catalyseur.

5. Utilisation selon la revendication 4, **caractérisée par le fait que** le catalyseur est choisi parmi le méthylate de sodium ou l'éthylate de sodium, le chlorure d'étain (IV).

6. Utilisation selon l'une ou plusieurs des revendications 1 à 5, **caractérisée par le fait que** les composés du silicium sont utilisés sous la forme d'une solution dans l'ammoniac liquide ou sous la forme d'une solution ou d'une dispersion dans l'eau.

7. Utilisation selon l'une ou plusieurs des revendications 1 à 6, **caractérisée par le fait que** les composés de silicium sont utilisés conjointement avec des silanes comprenant des unités phosphono.

8. Utilisation selon la revendication 7, **caractérisée par le fait que** les silanes comprenant des unités phosphono sont choisis parmi les composés de la formule (XII) : 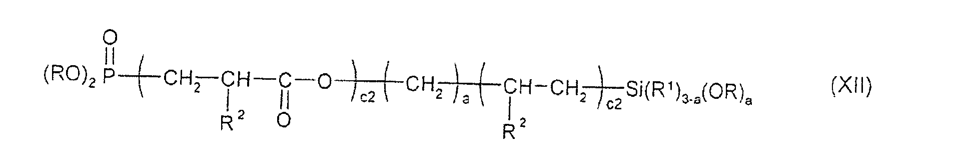 dans laquelle R, R¹, R², a et c2 ont les significations données dans la revendication 1.

9. Utilisation selon l'une des revendications 7 ou 8, **caractérisée par le fait que** les composés du silicium et les silanes comprenant des unités phosphono sont utilisés dans des rapports quantitatifs tels que le rapport molaire des atomes d'azote dans les composés du silicium tels que définis à l'une quelconque des revendications 1 à 5 aux atomes de phosphore dans les silanes de la formule (XII) se situe dans la plage de 1:1 à 3:1.

10. Utilisation selon l'une ou plusieurs des revendications 1 à 9, **caractérisée par le fait que** les matières fibreuses sont des tissus textiles sous la forme de tissus tissés, de tricots ou de non-tissés.

11. Utilisation selon l'une ou plusieurs des revendications 1 à 10, **caractérisée par le fait que** les matières fibreuses consistent en cellulose, polyester, polyamide, polypropylène ou en des mélanges de ces fibres.

12. Utilisation selon l'une ou plusieurs des revendications 1 à 11, **caractérisée par le fait que** le polyorganosiloxane a des groupes terminaux triméthylsilyle ou hydroxy.

13. Utilisation selon l'une ou plusieurs des revendications 1 à 12, **caractérisée par le fait que** des silanes de la formule (XII) sont en outre co-utilisés pendant la réaction d'équilibrage et/ou de condensation.
